# EUROPEAN PATENT APPLICATION

(11) **EP 4 700 798 A1**
(43) Date of publication of application: **25.02.2026**
(21) Application number: 24792145.5
(22) Date of filing: 19.04.2024
(51) Int. Cl.: H01B 5/14, G02F 1/1333, G02F 1/1343, B32B 7/10, F21S 8/00, H01Q 1/32, B32B 17/10, H01Q 1/12, G06F 3/044, B60J 1/00, B60R 16/06

(54) **LAMINATED ASSEMBLY, CONNECTOR STRUCTURE FOR LAMINATED ASSEMBLY, AND VEHICLE**

(30) Priority: 20.04.2023 CN 202310429502; 26.06.2023 CN 202321621479 U
(71) Applicant: Fuyao Glass Industry Group Co., Ltd., Fuqing, Fujian 350300 (CN)
(72) Inventor: YAN, Zheng, Fuqing, Fujian 350300 (CN); LIN, Xu, Fuqing, Fujian 350300 (CN); ZHENG, Jiansen, Fuqing, Fujian 350300 (CN); LIN, Shou, Fuqing, Fujian 350300 (CN); GUAN, Jinliang, Fuqing, Fujian 350300 (CN); ZENG, Yanfen, Fuqing, Fujian 350300 (CN); CHENG, Cheng, Fuqing, Fujian 350300 (CN); FENG, Tao, Fuqing, Fujian 350300 (CN)
(74) Representative: Corradini, Cesare
(86) International application number: PCT/CN2024/088919
(87) International publication number: WO 2024/217562

(57) **Abstract**

Provided are a laminated assembly (1000), a connector structure (32) for the laminated assembly (1000), and a vehicle. The laminated assembly (1000) comprises a laminated body (100), the laminated body (100) comprising at least one of a first transparent substrate (50), a second transparent substrate (60), a first functional layer (10), a second functional layer (20), a charge lead-out member (30) and an electromagnetic-field shielding member (40), wherein the first functional layer (10) is used for being electrically connected to an external power source; the second functional layer (20) is provided on the side of the second transparent substrate (60) that faces away from the first functional layer (10); the charge lead-out member (30) is provided on the side of the second functional layer (20) that faces away from the second transparent substrate (60), one end of the charge lead-out member (30) is electrically connected to the first functional layer (10), and the other end thereof is used for grounding; and the electromagnetic-field shielding member (40) is provided between the first functional layer (10) and the second functional layer (20), or the electromagnetic-field shielding member (40) is provided on the side of the second functional layer (20) that faces away from the second transparent substrate (60); or the laminated body (100) further comprising a second shielding layer (80), wherein the second shielding layer (80) is arranged along the periphery of the laminated body (100), and one end of the charge lead-out member (30) is at least electrically connected to part of the second shielding layer (80), and the other end of the charge lead-out member (30) is used for grounding. Since the charge lead-out member (30) is used, the usage safety of the laminated assembly (1000) can be improved. Since the second shielding layer (80) is used, the mounting effect of the laminated assembly (1000) can be beautified, and some ultraviolet rays can also be shielded, such that the impact of direct ultraviolet radiation on the charge lead-out member (30) is reduced.

## Description

### CROSS-REFERENCE TO RELATED APPLICATIONS

This application claims priority to Chinese Patent Application No. 202310429502.5, filed on April 20, 2023, entitled "LAMINATED ASSEMBLY, CONNECTOR STRUCTURE FOR LAMINATED ASSEMBLY, AND VEHICLE", and Chinese Patent Application No. 202321621479.1, filed on June 26, 2023, entitled "LAMINATED ASSEMBLY AND VEHICLE". The contents of the above identified applications are hereby incorporated herein by reference in their entireties.

### TECHNICAL FIELD

The present application relates to the field of laminated assemblies, and in particular to a laminated assembly, a connector structure for a laminated assembly, and a vehicle.

### BACKGROUND

Laminated assemblies are equipped with functional elements that enable the laminated assemblies to be functionalized, so that the laminated assembly can have functions such as lighting, privacy (e.g., electrochromic), video and heating. These functional elements are usually mounted inside the laminated assembly.

Currently, it is widely used to apply electric current to functional elements to enable the laminated assembly to have different functions. However, when the functional element is energized, a surface of the assembly can accumulate a large amount of charges. When a user touches the surface of the laminated assembly, there will be an electric shock. As a result, there are certain safety hazards when using the laminated assembly described above.

### SUMMARY

Based on this, it is necessary to provide a laminated assembly to address the problem that, during use of existing laminated assembly, a second functional layer of the existing laminated assembly has an electric shock sensation and thus poses a safety hazard. The laminated assembly can eliminate the electric shock sensation of the second functional layer, thereby improving the safety of the laminated assembly during use.

In a first aspect, the present application provides a laminated assembly, which includes a laminated body including a first transparent substrate, a second transparent substrate, a first functional layer, a second functional layer, and at least one of a charge lead-out member and an electromagnetic field shielding member;
the first functional layer is provided between the first transparent substrate and the second transparent substrate and is configured to be electrically connected to an external power source;
the second functional layer is provided on a side of the second transparent substrate away from the first functional layer;
the charge lead-out member is provided on a side of the second functional layer away from the second transparent substrate, one end of the charge lead-out member is electrically connected to the first functional layer, and another end of the charge lead-out member is configured to be grounded;
the electromagnetic field shielding member is provided between the first functional layer and the second functional layer, or the electromagnetic field shielding member is provided on a side of the second functional layer away from the second transparent substrate;
   or,
the laminated body further includes a second blocking layer provided on a side of the second functional layer away from the second transparent substrate, the second blocking layer is arranged along a periphery of the laminated body, one end of the charge lead-out member is electrically connected to at least a part of the second blocking layer, and another end of the charge lead-out member is configured to be grounded.

By providing at least one of the charge lead-out member and the electromagnetic field shielding member in the laminated assembly, the amount of charge on the second functional layer can be reduced. When the user touches the second functional layer, the risk of electric shock can be avoided or reduced, thereby improving the safety of the laminated assembly when in use.

If the laminated body is provided with a second blocking layer and an alternating current is applied to the laminated body, an electromagnetic field can be generated in an interior of the laminated body. Under the action of the electromagnetic field, a side where the second blocking layer is located can generate an electric potential and accumulate charges. Since the second blocking layer and the charge lead-out member are electrically connected, and the charge lead-out member is grounded, a large amount of charges accumulated on the side where the second blocking layer is located can be conducted away by the charge lead-out member to reduce the amount of charge on the side where the second blocking layer is located.

When the user touches a side of the laminated body provided with the second blocking layer, the user will not be subjected to an electric shock because the amount of charge remaining on the side where the second blocking layer is located is lower than a preset value. When the laminated assembly is applied to a device such as a vehicle, the safety of the use of the laminated assembly can be improved.

Secondly, the second blocking layer can also shield a mounting portion of the laminated assembly (e.g., the vehicle body sheet metal member), which can beautify the mounting effect of the laminated assembly and prevent the vehicle body sheet metal member and the like from being directly exposed to the user's sight. In addition, the second blocking layer can also block part of the ultraviolet rays to reduce the ultraviolet rays from directly radiating on the charge lead-out member and affecting the charge lead-out member.

In one possible embodiment, when the charge lead-out member is electrically connected to the first functional layer, the charge lead-out member includes a body and a connector structure, and the body is provided on the second functional layer;
the connector structure includes a charge lead-out portion and a power supply portion, one end of the power supply portion is configured to be electrically connected to the first functional layer, and another end of the power supply portion is configured to be electrically connected to the external power source; one end of the charge lead-out portion is electrically connected to the body, and another end of the charge lead-out portion is configured to be grounded, or another end of the charge lead-out portion is electrically connected to the power supply portion to be grounded through the power supply portion.

With the above configuration, the setting mode of the charge lead-out member is expanded without affecting the function of the charge lead-out member, thereby expanding the application range of the charge lead-out member.

In one possible embodiment, the power supply portion includes at least two power supply terminals, one end of each of the power supply terminals is configured to be electrically connected to the first functional layer, and another end of each of the power supply terminals is configured to be electrically connected to the external power source, one end of the charge lead-out portion is electrically connected to the body, and another end of the charge lead-out portion is configured to be electrically connected to an external grounding member.

With the above configuration, the structure of the charge lead-out portion is simplified, so that it can be directly electrically connected to the ECU, etc.

In one possible embodiment, the charge lead-out portion is provided on a side of the body away from the second transparent substrate, the charge lead-out portion includes a first conductive portion and an insulating portion, one end of the first conductive portion is electrically connected to the body, another end of the first conductive portion is configured to be electrically connected to the external grounding member, and the insulating portion wraps an exterior of the first conductive portion.

With such configuration, the structure of the charge lead-out portion can be simplified.

In one possible embodiment, the power supply portion includes at least two power supply terminals, the charge lead-out portion includes at least one connector configured to be electrically connected to the external power source, and the charge lead-out portion is electrically connected to the connector and the body, so that the body is grounded through the external power source;
one ends of the power supply terminals are electrically connected to the connector, and other ends of the power supply terminals are electrically connected to two opposite ends of the first functional layer in a layer thickness direction, so that the external power source applies current to the first functional layer.

By improving the connector structure that supplies power to the first functional layer, the connector structure can be grounded while supplying power to the first functional layer, thereby reducing the amount of charge accumulated on the second functional layer, thus improving the safety of the laminated assembly during use.

In one possible embodiment, a first blocking layer is provided on a surface of the body away from the second functional layer, the first blocking layer is provided with a connecting channel, and the charge lead-out portion is embedded in the connecting channel.

In this way, since the region where the first blocking layer is located is mounted with the charge lead-out member, when the charge lead-out member is connected to a sheet metal on a vehicle body or an ECU on the vehicle body, the first blocking layer can shield the vehicle body sheet metal to reduce the probability of being exposed to the eyes of the user, thus enhancing the visual effect of the laminated assembly after mounting. The charges on the second functional layer can be transferred to the charge lead-out portion through the connecting channel, thereby accelerating a transfer speed of the charges on the second functional layer.

In one possible embodiment, the charge lead-out portion is in contact with the second functional layer.

Since both ends of the charge lead-out portion are directly electrically connected to the second functional layer and the connector respectively, the charge lead-out portion can be used to quickly and accurately transfer the charges accumulated on the second functional layer, thereby increasing the speed at which the transfer of the charge can be performed.

In one possible embodiment, the connector structure further includes a second conductive portion provided on a side of the body away from the second functional layer;
the charge lead-out portion and the connector are electrically connected through the second conductive portion, and the power supply terminal and the connector, are electrically connected through the second conductive portion.

The electrical connection between the power supply terminal and the connector and the electrical connection between the charge lead-out portion and the connector are achieved through the second conductive portion, which can simplify the structure of the connector structure.

In one possible embodiment, the charge lead-out portion is bent toward the body with respect to the second conductive portion; or the charge lead-out portion is formed by a conductive adhesive portion provided on the second conductive portion, and the conductive adhesive portion is adhered to the body.

When a large amount of charges accumulates on the second functional layer, most of the charges can be transferred to the connector through the charge lead-out portion. In this way, the stability of the connection between the second conductive portion and the body can be improved without affecting the transfer efficiency of the charge.

In one possible embodiment, the second conductive portion includes a housing and a conductor accommodated in the housing, the charge lead-out portion and the connector are electrically connected through the conductor, and the power supply terminal and the connector are electrically connected through the conductor;
the housing is provided with a first hollow hole, the charge lead-out portion is formed by the conductive adhesive portion, and the conductive adhesive portion is filled in the first hollow hole.

In this way, the stability of the connection between the second conductive portion and the body can be improved without affecting the transfer efficiency of the charge.

In one possible embodiment, the body is a metal member, and a resistance value of the body is less than a resistance value of the second functional layer.

Since the lower the resistance of a conductor, the lower its impedance, and the stronger the conductivity of the conductor, the charges generated by the second functional layer can be quickly transferred by the charge lead-out member.

In one possible embodiment, the first functional layer includes an action region and an adhesive region, the adhesive region is arranged around an edge of the action region, ends of the power supply terminals extend through the adhesive region and are electrically connected to opposite ends of the action region in a layer thickness direction of the laminated assembly, respectively.

The adhesive region is provided at the edge of the action region which can improve the adhesion effect between the entire first functional layer and two film layers adjacent thereto in the layer thickness direction of the laminated assembly, thereby reducing the probability of cracking between the first functional layer and the two film layers. In addition, the power supply terminal extends through the adhesive region and is electrically connected to the action region, the adhesive region can also improve the stability of the connection between the power supply terminal and the action region and reduces the probability of separation between the power supply terminal and the action region.

In one possible embodiment, the laminated assembly further includes a fourth blocking layer provided on a side of the body away from the second functional layer, and the fourth blocking layer at least avoids a portion of the charge lead-out member electrically connected to the body.

When the above-mentioned laminated assembly is assembled on a vehicle, since the region where the fourth blocking layer is located is mounted with the charge lead-out member, when the charge lead-out member is connected to a sheet metal on a vehicle body or an ECU on the vehicle body, the fourth blocking layer can shield the vehicle body sheet metal to reduce the probability of being exposed to the eyes of the user, thus enhancing the visual effect of the laminated assembly after it is mounted.

When one end of the charge lead-out member is electrically connected to at least a part of the second blocking layer, the laminated body is mounted on an object to be mounted through the charge lead-out member, and the charge lead-out member is grounded through the object to be mounted.

In one possible embodiment, the charge lead-out member is adhesively connected between the object to be mounted and the laminated body.

In this way, the mounting mode of the charge lead-out member can be simplified, making it easier for users to operate.

In one possible embodiment, the charge lead-out member is a conductive adhesive member.

When the laminated assembly is mounted to the vehicle body sheet metal part the assembly of the laminated assembly can be completed quickly. Moreover, when the laminated assembly is detached from the vehicle body, it is easy to remount the laminated assembly. In addition, the conductive adhesive is inexpensive and easy to obtain, which can also reduce the production cost of the laminated assembly.

In one possible embodiment, the laminated assembly further includes a first encapsulation member located on a side of the second blocking layer in a layer thickness direction; the first encapsulation member is provided with a second hollow hole, and the charge lead-out member is provided in the second hollow hole.

When the laminated assembly is provided with the first encapsulation member, the second hollow hole can be provided in the first encapsulation member, and the charge lead-out member can be filled in the second hollow hole, so that when an alternating current is applied to the laminated assembly, a large amount of charges accumulated on the second functional layer can be conducted away by utilizing the charge lead-out member.

In one possible embodiment, the laminated assembly further includes a second encapsulation member, and the second encapsulation member wraps an outer peripheral wall of the laminated body and is connected to the first encapsulation member.

The second encapsulation member can be used to more effectively protect the laminated assembly, thereby further reducing the probability of cracks and water ingress at the edges of the laminated assembly, which enhances the strength of the laminated assembly.

In one possible embodiment, the second functional layer is located on a side of the second blocking layer away from the charge lead-out member, and the second functional layer and the second blocking layer are staggered in the layer thickness direction; wherein the second functional layer and the second blocking layer are electrically connected.

After the charge lead-out member is grounded, the charges accumulated on the second functional layer can be conducted away by the charge lead-out member to reduce the amount of charge on the second functional layer. When a user touches the second functional layer the user will not be subjected to an electric shock because the charge remaining on the second functional layer is lower than a preset value, thereby improving the safety of the laminated assembly when in use.

Secondly, the second blocking layer can also shield a mounting portion of the laminated assembly (e.g., the vehicle body sheet metal), which can enhance the aesthetic appearance of the laminated assembly and prevent the vehicle body sheet metal member and the like from being directly exposed to the user's sight. In addition, the second blocking layer can also block part of the ultraviolet rays to reduce the ultraviolet rays from directly radiating on the charge lead-out member and affecting the charge lead-out member.

In one possible embodiment, the laminated body further includes a third blocking layer located on a side of the first transparent substrate facing the first functional layer, and the third blocking layer is arranged along a periphery of the laminated body.

In this way, the third blocking layer can shield the charge lead-out member and the vehicle body sheet metal member, etc., so as to enhance the visual effect of the laminated assembly after mounting.

In one possible embodiment, a projection of the third blocking layer in the layer thickness direction covers the charge lead-out member, and the third blocking layer is an insulating member.

In this way, not only the difficulty of obtaining the third blocking layer is reduced, but also the shielding effect on the charge lead-out member and the vehicle body sheet metal member, etc., is improved.

In one possible embodiment, a projection of the third blocking layer in the layer thickness direction covers the charge lead-out member,

In this way, the shielding effect on the charge lead-out member and the vehicle body sheet metal member, etc. can be improved.

In one possible embodiment, the third blocking layer is an insulating member.

In this way, the difficulty of obtaining the third blocking layer can be reduced.

In one possible embodiment, the electromagnetic field shielding member further includes an insulating shielding layer, the insulating layer is located on a side of the second functional layer away from the first functional layer, and the insulating layer at least avoids a portion of the charge lead-out member that is electrically connected to the body.

When a user touches the second functional layer the user and the second functional layer are separated by the insulating shielding layer, thereby reducing the probability that the leakage of the charge accumulated on the second functional layer may lead to an electric shock to the user, thus improving the reliability of the laminated assembly.

In one possible embodiment, the electromagnetic field shielding member further includes a first shielding layer provided between the second functional layer and the first functional layer;
both ends of the first shielding layer and the first functional layer in a layer thickness direction of the laminated assembly are configured to be electrically connected to external power sources, and a voltage direction of the first shielding layer is opposite to a voltage direction of the first functional layer.

Since an induced current generated by the second functional layer is relatively small under the action of the electromagnetic field generated by the first shielding layer, the charges accumulated on the second functional layer are also less, which can reduce the probability of electric shock when the user touches the second functional layer.

In one possible embodiment, both ends of the first shielding layer and the first functional layer in the layer thickness direction of the laminated assembly are configured to be electrically connected to a same external power source.

When the first shielding layer and the first functional layer are powered at the same time, the currents connected to the first shielding layer and the first functional layer are in opposite directions, and thus the direction of the electromagnetic field generated by the first shielding layer is opposite to the direction of the electromagnetic field generated by the first functional layer. Since an induced current generated by the second functional layer is relatively small, under the action of the electromagnetic field generated by the first shielding layer, the charges accumulated on the second functional layer are also less, which can reduce the probability of electric shock when the user touches the second functional layer.

In one possible embodiment, the electromagnetic field shielding member further includes a second shielding layer distributed around the first functional layer, and the second shielding layer avoids a part of the charge lead-out member that is electrically connected to the first functional layer.

The second shielding layer can reduce the probability of an induced current generated by the second functional layer, thereby reducing the amount of charges accumulated on the second functional layer, which may reduce the probability of electric shock when a user touches the second functional layer.

In a second aspect, the present application provides a connector structure for a laminated assembly. The connector structure includes the above-mentioned charge lead-out portion and a power supply portion, one end of the power supply portion is configured to be electrically connected to a first functional layer of the laminated assembly, another end of the power supply portion is configured to be electrically connected to an external power source, one end of the charge lead-out portion is configured to be electrically connected to a body of the laminated assembly, and another end of the charge lead-out portion is configured to be grounded, or another end of the charge lead-out portion is configured to electrically connected to the power supply portion to be grounded through the power supply portion.

With the above configuration, the setting mode of the charge lead-out member is expanded without affecting the function of the charge lead-out member, thereby expanding the application range of the charge lead-out member.

In one possible embodiment, the power supply portion includes at least two power supply terminals, one end of each of the power supply terminals is configured to be electrically connected to the first functional layer, and another end of each of the power supply terminals is configured to be electrically connected to the external power source, one end of the charge lead-out portion is electrically connected to the body of the laminated assembly, and another end of the charge lead-out portion is configured to be electrically connected to an external grounding member.

With the above configuration, the structure of the charge lead-out portion is simplified, so that it can be directly electrically connected to the ECU, etc.

In one possible embodiment, the power supply portion includes at least two power supply terminals, the charge lead-out portion includes at least one connector, the connector is configured to be electrically connected to the external power source, and the charge lead-out portion is electrically connected to the connector and the body of the laminated assembly, so that the body of the laminated assembly is grounded through the external power source;
one end of each of the power supply terminals is electrically connected to the connector, and other ends of the power supply terminals are electrically connected to two opposite ends of the first functional layer in a layer thickness direction, so that the external power source applies current to the first functional layer.

With such a configuration, the connector structure can be electrically connected to an external power source to apply current to the first functional layer while also being grounded.

A vehicle includes a vehicle body and the above-mentioned laminated assembly, and the laminated assembly is mounted to the vehicle body.

A laminated assembly, a connector structure for a laminated assembly, and a vehicle are provided according to embodiments of the present application. At least one of a charge lead-out member and an electromagnetic field shielding member can be provided in the laminated assembly, the charge lead-out member can be provided on the side of the second functional layer away from the first functional layer, and the charge lead-out member can be grounded. The electromagnetic field shielding member can be provided between the first functional layer and the second functional layer, or on the side of the second functional layer away from the first functional layer.

When current is applied to the first functional layer, if the laminated assembly is provided with the charge lead-out member, the charge lead-out member is provided on the side of the second functional layer away from the first functional layer, and one end of the charge lead-out member is electrically connected to the first functional layer and the other end is grounded, the charges accumulated on the second functional layer can be conducted away by the charge lead-out member, thereby reducing the amount of charges on the second functional layer. Since the charge remaining on the second functional layer is less than a preset value, when a user touches the second functional layer, the risk of electric shock is avoided or reduced.

If the laminated assembly is provided with the electromagnetic field shielding member, then under the action of the electromagnetic field shielding member, a large amount of charges will not be accumulated on the second functional layer. When the user touches the second functional layer, there will be no electric shock, thereby improving the safety of the laminated assembly when in use.

In addition, the laminated body can be provided with the second shielding layer. When an alternating current is applied to the laminated body, an electromagnetic field can be generated in an interior of the laminated body. Under the action of the electromagnetic field, a side where the second blocking layer is located can generate an electric potential and accumulate charges. Since the second blocking layer and the charge lead-out member are electrically connected, and the charge lead-out member is grounded, a large amount of charges accumulated on the side where the second blocking layer is located can be conducted away by the charge lead-out member to reduce the amount of charge on the side where the second blocking layer is located.

When the user touches a side of the laminated body provided with the second blocking layer, the user will not be subjected to an electric shock because the amount of charge remaining on the side where the second blocking layer is located is lower than a preset value. When the laminated assembly is applied to a device such as a vehicle, the safety of the use of the laminated assembly can be improved.
the second blocking layer can also shield a mounting portion of the laminated assembly (e.g., the vehicle body sheet metal member), which can enhance the aesthetic appearance of the laminated assembly and prevent the vehicle body sheet metal member and the like from being directly exposed to the user's sight. In addition, the second blocking layer can also block part of the ultraviolet rays to reduce the ultraviolet rays from directly radiating on the charge lead-out member and affecting the charge lead-out member.

### BRIEF DESCRIPTION OF THE DRAWINGS

In order to illustrate the embodiments of the present application more clearly, the drawings used in the embodiments or the conventional art will be described briefly. Apparently, the following described drawings are merely for the embodiments of the present application, and other drawings can be derived by those of ordinary skill in the art without any creative effort. In the accompanying drawings:
FIG. 1 is a cross-sectional view of a laminated assembly provided in some embodiments of the present application in which only a charge lead-out member is provided.
FIG. 2 is a cross-sectional view of a laminated assembly provided in some embodiments of the present application in which only an electromagnetic field shielding member is provided.
FIG. 3 is a cross-sectional view of a laminated assembly provided in some embodiments of the present application in which both a charge lead-out member and an electromagnetic field shielding member are provided.
FIG. 4 is a partial cross-sectional view of a laminated assembly provided in some other embodiments of the present application in which only an electromagnetic field shielding member is provided.
FIG. 5 is a schematic diagram of a part of a connector structure of a laminated assembly provided in some embodiments of the present application.
FIG. 6 is a schematic structural diagram of a charge lead-out portion of a laminated assembly provided in some embodiments of the present application.
FIG. 7 is a partial cross-sectional view of a laminated assembly provided in some embodiments of the present application in which only a charge lead-out member is provided.
FIG. 8 is a schematic diagram of a part of a connector structure of a laminated assembly provided in some other embodiments of the present application.
FIG. 9 is a partial cross-sectional view of a laminated assembly provided in some embodiments of the present application.
FIG. 10 is a partial cross-sectional view of a laminated assembly provided in some embodiments of the present application with a first blocking layer having an insulating region.
FIG. 11 is a partial cross-sectional view of a laminated assembly provided in some embodiments of the present application provided with an encapsulation member but without a second hollow hole in a first blocking layer.
FIG. 12 is a partial cross-sectional view of a laminated assembly provided in some embodiments of the present application provided with an encapsulation member and a second hollow hole formed in a first blocking layer.
FIG. 13 is a partial cross-sectional view of a laminated assembly provided with only a second blocking layer in some embodiments of the present application.
FIG. 14 is a partial cross-sectional view of a laminated assembly provided with both a first blocking layer and a second blocking layer in some embodiments of the present application.
FIG. 15 is a cross-sectional view of the first blocking layer in FIG. 14 without a second hollow hole.
FIG. 16 is a cross-sectional view of a laminated assembly provided in some embodiments of the present application in which both a charge lead-out member and an insulating shielding layer are provided.
FIG. 17 is a cross-sectional view of a laminated assembly provided in some embodiments of the present application in which only an insulating shielding layer is provided.
FIG. 18 is a cross-sectional view of a laminated assembly provided in some embodiments of the present application in which both a charge lead-out member and a first shielding layer are provided.
FIG. 19 is a cross-sectional view of a laminated assembly provided in some embodiments of the present application in which only a first shielding layer is provided.
FIG. 20 is a cross-sectional view of a laminated assembly provided in some embodiments of the present application in which both a charge lead-out member and a second shielding layer are provided.
FIG. 21 is a cross-sectional view of a laminated assembly provided in some embodiments of the present application in which only a second shielding layer is provided.

### Reference signs

10. First functional layer; 11. Action region; 12. Adhesive region; 20. Second functional layer; 30. charge lead-out member; 31. First blocking layer; 311. connecting channel; 32. connector structure; 321. Charge lead-out portion; 3211. First conductive portion; 3212. Insulating portion; 3213. Connector; 322. Power supply portion; 3221. Power supply terminal; 323. Second conductive portion; 33. Avoidance portion; 40. Electromagnetic field shielding member; 41. Insulating shielding layer; 42. First shielding layer; 43. Second shielding layer; 50. First transparent substrate; 60. Second transparent substrate; 70. Adhesive layer; 80. Second shielding layer; 81. Conductive region; 82. Insulating region; 90. Third blocking layer; 10. Laminated body; 200. First encapsulation portion; 300. Second encapsulation portion; 400. Vehicle body sheet metal member; 1000. Laminated assembly.

### DETAILED DESCRIPTION OF THE EMBODIMENTS

In order to make the above objects, features and advantages of the present application clear and easier to understand, the specific embodiments of the present application are described in detail below in combination with the accompanying drawings. Many specific details are set forth in the following description to facilitate a full understanding of the present application. However, the present application can be implemented in many ways different from those described herein, and those skilled in the art can make similar improvements without departing from the connotation of the present application. Therefore, the present application is not limited by the specific embodiments disclosed below.

In the description of the present application, it should be understood that the terms "thickness", "upper", "lower", "front", "rear", "left", "inner", "outer" are based on the azimuth or position relationship shown in the attached drawings, which are only for the convenience of describing the present application and simplifying the description, rather than indicating or implying that the device or element must have a specific azimuth, be constructed and operated in a specific azimuth, so such terms cannot be understood as a limitation of the present application.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present application, "a plurality of" means at least two, such as two, three, etc., unless otherwise expressly and specifically defined.

In the present application, unless otherwise expressly specified and limited, the terms "mount", "connect", "contact", "fix" and other terms should be understood in a broad sense, for example, they can be fixed connections, detachable connections, or integrated. They can be mechanical connection or electrical connection. They can be directly connected or indirectly connected through an intermediate medium. They can be the connection between two elements or the interaction relationship between two elements, unless otherwise expressly limited. For those skilled in the art, the specific meaning of the above terms in the present application can be understood according to the specific situation.

It should be noted that when an element is called "fixed to" or "provided on" another element, it can be directly on another element or there can be an intermediate element. When an element is considered to be "connected" to another element, it can be directly connected to another element or there may be intermediate elements at the same time.

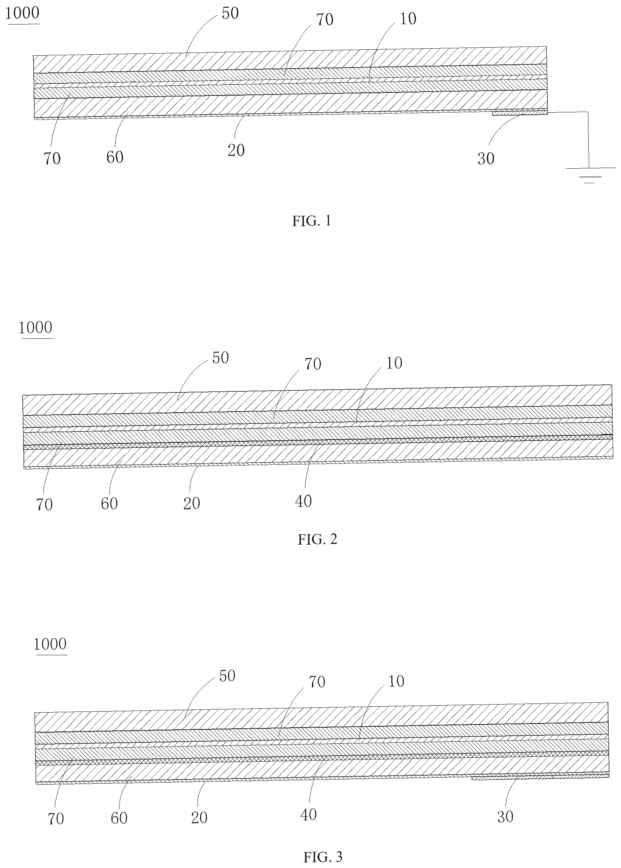

Referring to FIGS. 1 and 2, a laminated assembly 1000 is provided according to an embodiment of the present application. The laminated assembly 1000 includes a laminated body 100. Both a charge lead-out member 30 and an electromagnetic field shielding member 40 may be provided, or only one of them may be provided. The laminated body 100 includes a first transparent substrate 50, a second transparent substrate 60, a first functional layer 10, a second functional layer 20, and at least one of the charge lead-out member 30 and the electromagnetic field shielding member 40.

The first functional layer 10 is provided between the first transparent substrate 50 and the second transparent substrate 60, and is configured to be electrically connected to an external power source. The second functional layer 20 is provided on a side of the second transparent substrate 60 away from the first functional layer 10. The charge lead-out member 30 is provided on a side of the second functional layer 20 away from the second transparent substrate 60. One end of the charge lead-out member 30 is electrically connected to the first functional layer 10, and the other end of the charge lead-out member 30 is configured to be grounded. The electromagnetic field shielding member 40 is provided between the first functional layer 10 and the second functional layer 20, or the electromagnetic field shielding member 40 is provided on the side of the second functional layer 20 away from the second transparent substrate 60.

Alternatively, the laminated body 100 further includes a second blocking layer 80. The second blocking layer 80 is provided on the side of the second functional layer 20 away from the second transparent substrate 60, and the second blocking layer 80 is arranged along a periphery of the laminated body 100. One end of the charge lead-out member 30 is electrically connected to at least a part of the second blocking layer 80, and the other end of the charge lead-out member 30 is configured to be grounded.

The first transparent substrate 50 and the second transparent substrate 60 can both be ordinary glass. Along a layer thickness direction of the laminated assembly 1000, the first transparent substrate 50 and the second transparent substrate 60 can be provided on both sides of the first functional layer 10, respectively. An adhesive layer 70 can be provided between each transparent substrate and the first functional layer 10, so as to increase the adhesive effect between the transparent substrate and the first functional layer 10. The adhesive layer 70 may be made of adhesive materials such as polyvinyl butyral (PVB), polyurethane (PU), and ethylene-vinyl acetate copolymer (EVA). The material for preparing the first functional layer 10 is not limited to one or a combination of two or more of polymer dispersed liquid crystal (PDLC), guest host effect liquid crystal (GHLC), electrochromic device (ECD), suspended particle device (SPD), LC, light-emitting diode (LED), thermal insulation film, color-changing film, light-guiding film, display film, etc.

The above-mentioned second transparent substrate 60 may be arranged parallel to and spaced apart from the first transparent substrate 50. The first functional layer 10 may be arranged between the first transparent substrate 50 and the second transparent substrate 60 and may be configured to be electrically connected to an external power source. For example, when an alternating current is applied to the first functional layer 10 changes, the light transmittance, light absorptivity and light reflectivity, etc. of the first functional layer 10 itself may change accordingly, thereby changing the color of the first functional layer 10 itself or changing the temperature of the first functional layer 10 itself, and so on.

The second functional layer 20 may be provided on a side of the second transparent substrate 60 away from the first functional layer 10. The second functional layer 20 may be a conductive layer containing metal. The conductive layer may be a layer structure having metal elements, such as a metal film layer. Certainly, the conductive layer is not limited to a film layer formed by a metal element such as a copper film, but may also be a film layer containing a conductive material, composed of a continuously distributed material, or having a spacing structure such as a grid.

For example, silver-plated layers, low-emissivity (LOW-E) thermal insulation layers with conductive properties, anti-radiation layers, sound insulation layers, dimming layers, etc. can be used as the second functional layer. The LOW-E layer can be made of a variety of metals, which has good heat insulation and light transmittance.

The second blocking layer 80 may be an ink layer coated with ink, or a film layer coated with other coatings. The layer thickness direction may be understood as a layer thickness direction of the laminated assembly 1000. Taking an orthographic projection of the laminated body 100 in the layer thickness direction as a rectangle as an example, the orthographic projection of the second blocking layer 80 in the layer thickness direction may coincide with the outline of the rectangle.

When the charge lead-out member 30 is provided in the laminated assembly 1000, the charge lead-out member 30 may be provided on a side of the second functional layer 20 away from the second transparent substrate 60. One end of the charge lead-out member 30 may be electrically connected to the first functional layer 10, and the other end of the charge lead-out member 30 may be configured to be grounded. For example, one end of the charge lead-out member 30 is electrically connected to the first functional layer 10, and the other end of the charge lead-out member 30 can be electrically connected to a ground end of an electronic control unit (ECU). Alternatively, a ground end of the charge lead-out member 30 is directly grounded.

When the electromagnetic field shielding member 40 is provided in the laminated assembly 1000, the electromagnetic field shielding member 40 may be provided between the first functional layer 10 and the second functional layer 20. Alternatively, the electromagnetic field shielding member 40 is provided on the side of the second functional layer 20 away from the second transparent substrate 60.

The above-mentioned laminated assembly 1000 will be described below with reference to the specific embodiments illustrated in FIGS. 1 to 3, 9 and 10.

In some embodiments, only the charge lead-out member 30 is provided in the laminated assembly 1000. As shown in FIG. 1 the charge lead-out member 30 may be provided on the side of the second functional layer 20 away from the second transparent substrate 60 and can be grounded. When an alternating current is applied to the first functional layer 10, it can generate an electromagnetic field. The second functional layer 20 can generate electric potential under the action of the electromagnetic field to accumulate charges.

Since the charge lead-out element 30 is provided on the side of the second functional layer 20 away from the second transparent substrate 60, and one end of the charge lead-out element 30 is electrically connected to the first functional layer 10 and the other end of the charge lead-out element 30 can be grounded, the charges accumulated on the second functional layer 20 can be conducted away by the charge lead-out element 30, thereby reducing the amount of charge on the second functional layer 20. The amount of charge remaining on the second functional layer 20 is lower than a preset value. When a user touches the second functional layer 20 there is no electric shock, which improves the safety of the laminated assembly 1000 when in use.

In other embodiments, only the electromagnetic field shielding member 40 is provided in the laminated assembly 1000. As shown in FIG. 2, the electromagnetic field shielding member 40 may be provided between the first functional layer 10 and the second functional layer 20. When an alternating current is applied to the first functional layer 10, since the electromagnetic field shielding member 40 has the ability to reduce the probability of the second functional layer 20 generating an induced current and an electromagnetic field, under the action of the electromagnetic field shielding member 40, a large amount of charges will not or is unlikely to be accumulated on the second functional layer 20. When a user touches the second functional layer 20, there will be no electric shock.

In yet some other embodiments, both the charge lead-out member 30 and the electromagnetic field shielding member 40 are provided in the laminated assembly 1000. As shown in FIG. 3 the charge lead-out member 30 may be provided on the side of the second functional layer 20 away from the second transparent substrate 60 and is capable of being grounded. The electromagnetic field shielding member 40 may be provided between the first functional layer 10 and the second functional layer 20.

When an alternating current is applied to the first functional layer 10, it can generate an electromagnetic field. Since the electromagnetic field shielding member 40 has the ability to reduce the probability of the second functional layer 20 generating an induced current and an electromagnetic field, under the action of the electromagnetic field shielding member 40, a large amount of charge will not or is unlikely to accumulate on the second functional layer 20. Moreover, since the charge lead-out member 30 is provided on the side of the second functional layer 20 away from the second transparent substrate 60, one end of the charge lead-out member 30 is electrically connected to the first functional layer 10, and the other end of the charge lead-out member 30 can be grounded, the charges accumulated on the second functional layer 20 can be conducted away by the charge lead-out member 30, thereby effectively reducing the amount of charge on the second functional layer 20. The amount of charge accumulated on the second functional layer 20 is reduced, and the risk of electric shock when the user touches the second functional layer 20 is avoided or reduced.

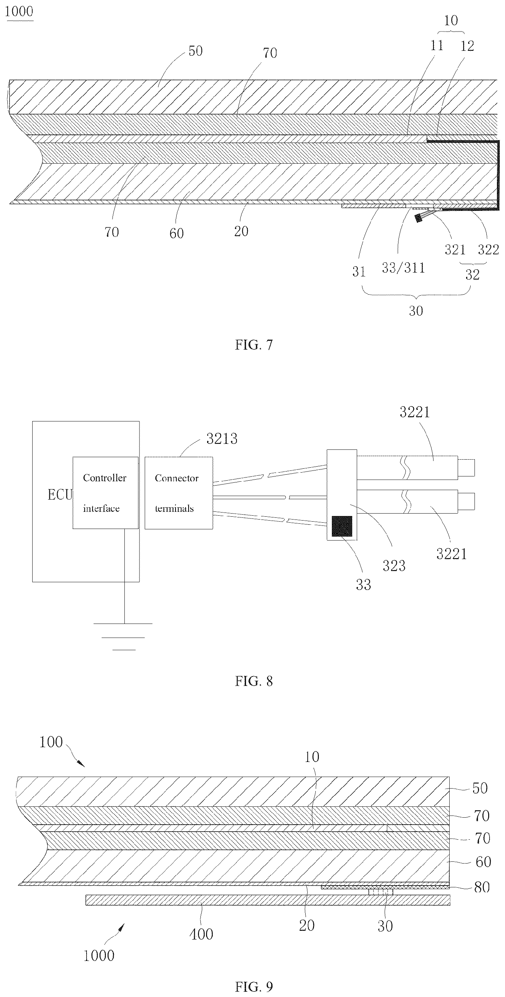

In yet some other embodiments, as shown in FIG. 9, when the entire second blocking layer 80 is a conductive layer, one end of the charge lead-out member 30 can be electrically connected to the second blocking layer 80, and the other end of the charge lead-out member 30 can be electrically connected to a grounding member, such as a vehicle body sheet metal member 400 of a vehicle. When an alternating current is applied to the laminated assembly 1000, the charges accumulated on the laminated body 100 can be first transferred to the second blocking layer 80 and then transferred to the charge lead-out element 30 and then conducted out through the charge lead-out member 30.

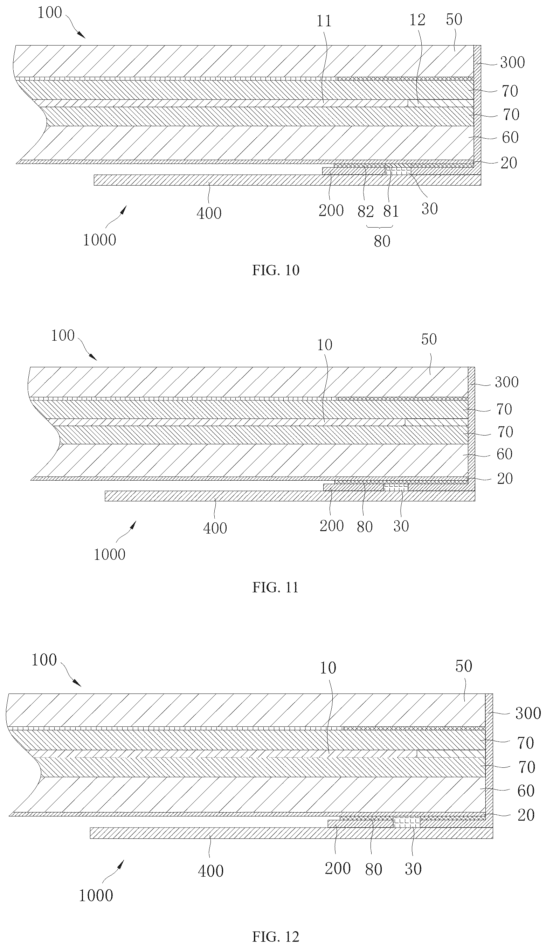

As shown in FIG. 10 in other embodiments, when only a part of the second blocking layer 80 is conductive, in other words, the second blocking layer 80 can be divided into two regions, one of which is a conductive region 81 and the other is an insulating region 82. One end of the charge lead-out member 30 may be electrically connected to the conductive region 81 of the second blocking layer 80, and the other end of the charge lead-out member 30 may be connected to the vehicle body sheet metal member 400 of the vehicle.

When an alternating current is applied to the laminated assembly 1000, a large amount of charges accumulated on the laminated body 100 may first accumulate in the conductive region 81 of the second blocking layer 80, then be transferred to the charge lead-out member 30 through the conductive region 81, and then be conducted out through the charge lead-out member 30.

In summary, by providing at least one of the charge lead-out member 30 and the electromagnetic field shielding member 40 in the laminated assembly 1000, the amount of charge on the second functional layer 20 can be reduced. When the user touches the second functional layer 20, the risk of electric shock can be avoided or reduced, thereby improving the safety of the laminated assembly 1000 when in use.

If the laminated body 100 is provided with a second blocking layer 80, when an alternating current is applied to the laminated body 100, an electromagnetic field can be generated in an interior of the laminated body 100. Under the action of the electromagnetic field, a side where the second blocking layer 80 is located can generate an electric potential and accumulate charges. Since the second blocking layer 80 and the charge lead-out member 30 are electrically connected, and the charge lead-out member 30 is grounded, a large amount of charges accumulated on the side where the second blocking layer 80 is located can be conducted away by the charge lead-out member 30 to reduce the amount of charge on the side where the second blocking layer 80 is located.

When the user touches a side of the laminated body 100 provided with the second blocking layer 80, the user will not be subjected to an electric shock because the amount of charge remaining on the side where the second blocking layer 80 is located is lower than a preset value. When the laminated assembly 1000 is applied to a device such as a vehicle, the safety of the use of the laminated assembly 1000 can be improved.

Secondly, the second blocking layer 80 can also shield a mounting portion of the laminated assembly 1000 (e.g., the vehicle body sheet metal member 400), which can enhance the aesthetic appearance of the laminated assembly 1000 and prevent the vehicle body sheet metal member 400 and the like from being directly exposed to the user's sight. In addition, the second blocking layer 80 can also block part of the ultraviolet rays to reduce the ultraviolet rays from directly radiating on the charge lead-out member 30 and affecting the charge lead-out member 30.

Referring to FIG. 10 in some embodiments, the second blocking layer 80 may be an insulating layer, and the charge lead-out member 30 may extend through the second blocking layer 80 to be electrically connected to the laminated body 100. For example, a second hollow hole may be provided on the second blocking layer 80. The conductive region 81 of the second blocking layer 80 in FIG. 10 may be regarded as the second hollow hole, and the charge lead-out member 30 may be provided in the second hollow hole. When an alternating current is applied to the laminated assembly 1000, the charges accumulated on the laminated body 100 can first be accumulated in large quantities in a vicinity of the second hollow hole of the second blocking layer 80. The charge lead-out member 30 filled in the second hollow hole can be regarded as a charge transfer channel, and the large amount of charges accumulated on the laminated body 100 can be conducted out through the charge lead-out member 30 in the second hollow hole.

With the above configuration, the material for preparing the second blocking layer 80 can be determined according to the actual situation, thereby expanding the range of materials to be selected for the second blocking layer 80 and reducing the difficulty of preparing the second blocking layer 80.

In practical applications, the laminated assembly 1000 may be used in the sunroof structure of a vehicle, that is, the laminated assembly 1000 may be used in the structure of the sunroof glass. When the laminated assembly is not provided with a charge lead-out member, an alternating current of 36V can be applied to the first functional layer of the laminated assembly. At this time, a surface of the second functional layer of the laminated assembly generates a voltage of 18.54V after measurement. When the laminated assembly 1000 is provided with the charge lead-out member 30, an alternating current of 36V can be applied to the first functional layer 10 of the laminated assembly 1000. At this time, the surface of the second functional layer 20 of the laminated assembly 1000 can generate a voltage of 0.019V after measurement.

It can be seen that the large amount of charges accumulated on the second functional layer 20 can be conducted to the vehicle body by the charge lead-out member 30 and flow to the ground, while the amount of charge remaining on the second functional layer 20 is small, which is not sufficient to jeopardize the user's body and avoid a safety hazard.

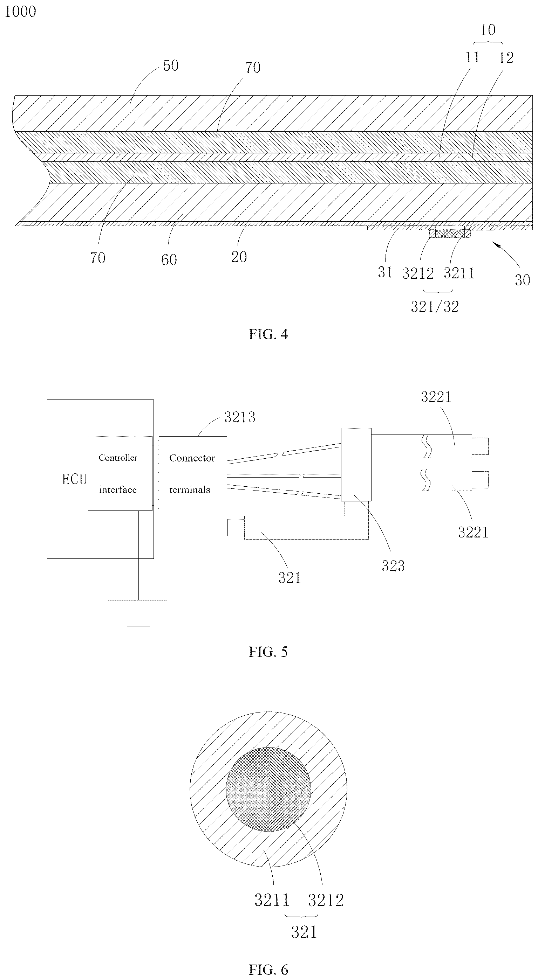

In some embodiments, as shown in FIG. 4 when the charge lead-out member 30 is electrically connected to the first functional layer 10, the charge lead-out member 30 may include a body (not shown) and a connector structure 32 and the body may be provided on the second functional layer 20. Referring together to FIG. 7, the connector structure 32 may include a charge lead-out portion 321 and a power supply portion 322. One end of the power supply portion 322 may be configured to be electrically connected to the first functional layer 10 and the other end of the power supply portion 322 may be configured to be electrically connected to an external power source. One end of the charge lead-out portion 321 may be electrically connected to the body, and the other end of the charge lead-out portion 321 may be configured to be grounded, or the other end of the charge lead-out portion 321 may be electrically connected to the power supply portion 322 to be grounded through the power supply portion 322.

In some embodiments, the charge lead-out portion 321 may be electrically connected to the power supply portion 322. When one end of the power supply portion 322 is electrically connected to an external power source, current applied by the external power source may flow to the first functional layer 10 through the power supply portion 322. The first functional layer 10 can generate an electromagnetic field, and the second functional layer 20 can accumulate charges under the action of the first functional layer 10. With the body of the charge lead-out portion 321 provided on the second functional layer 20, one end of the charge lead-out portion 321 is connected to the body, and the other end of the charge lead-out portion 321 can be electrically connected to the power supply portion 322, so that a large amount of charges on the second functional layer 20 can first flow to the body, and then pass through the body to flow through the charge lead-out portion 321 and the power supply portion 322 in sequence, and finally flow to the ground through the power supply portion 322.

In other embodiments, as shown in FIG. 4, the charge lead-out portion 321 may be electrically connected to a ground terminal of the ECU. When one end of the power supply portion 322 is electrically connected to an external power source, current applied by the external power source may flow to the first functional layer 10 through the power supply portion 322. The first functional layer 10 can generate an electromagnetic field, and the second functional layer 20 can accumulate charges under the action of the first functional layer 10. Since the body of the charge lead-out portion 321 is provided on the second functional layer 20 and the charge lead-out portion 321 can be electrically connected to the ground terminal of the ECU, a large amount of charges on the second functional layer 20 can first flow to the body, and then pass through the body to flow through the charge lead-out portion 321 and the ECU, and finally flow to the ground.

With the above configuration, the setting mode of the charge lead-out member 30 is expanded without affecting the function of the charge lead-out member 30, thereby expanding the application range of the charge lead-out member 30.

In some embodiments, referring to FIG. 5, the power supply portion 322 includes at least two power supply terminals 3221. One end of each power supply terminal 3221 can be electrically connected to the first functional layer 10, and the other end of each power supply terminal 3221 can be electrically connected to an external power source. One end of the charge lead-out portion 321 can be electrically connected to the body, and the other end of the charge lead-out portion 321 can be configured to be electrically connected to an external grounding member.

When one end of the power supply terminal 3221 is electrically connected to an external power source, current applied by the external power source can flow to the first functional layer 10 through the power supply terminal 3221. The first functional layer 10 can generate an electromagnetic field, and the second functional layer 20 can accumulate charges under the action of the first functional layer 10. Since the body of the charge lead-out portion 321 is provided on the second functional layer 20, and the charge lead-out portion 321 can be electrically connected to the ground terminal of the ECU, a large amount of charges on the second functional layer 20 can first flow to the body, and then pass through the body to flow through the charge lead-out portion 321 and the ECU, and finally flow to the ground. With the above configuration, the structure of the charge lead-out portion 321 is simplified, so that it can be directly electrically connected to the ECU, etc.

In some embodiments, as shown in FIG. 6, the charge lead-out portion 321 may be provided on a side of the body away from the second transparent substrate 60. The charge derivation portion 321 may include a first conductive portion 3211 and an insulating portion 3212. One end of the first conductive portion 3211 can be electrically connected to the body, and the other end of the first conductive portion 3211 can be configured to be electrically connected to an external grounding member. The insulating portion 3212 may wrap around an exterior of the first conductive portion 3211.

Exemplarily, in the embodiment illustrated in FIG. 6, the structure of the first conductive portion 3211 may be a cylinder, a side surface of the cylinder arranged along a circumferential direction may be wrapped with a layer of insulating portion 3212, the other side surface of the cylinder may be electrically connected to the body, and a remaining side surface can be configured to be electrically connected to an external grounding member, such as an ECU. With such configuration, the structure of the charge lead-out portion 321 can be simplified.

Referring to FIGS. 5 and 7 in conjunction, in some embodiments, the power supply portion 322 may include at least two power supply terminals 3221, and the charge lead-out portion 321 may include at least one connector 3213. The connector 3213 may be configured to be electrically connected to an external power source, for example, the connector 3213 may be electrically connected to the ECU. The charge lead-out portion 321 can be electrically connected to the connector 3213 and the body, so that the body is grounded through the external power source.

Ends of all power supply terminals 3221 located on the same side can be electrically connected to the connector 3213, and the other ends of all power supply terminals 3221 on the other same side can be electrically connected between opposite ends of the first functional layer 10 in the layer thickness direction and the connector 3213, respectively, so that an external power source can apply current to the first functional layer 10.

As shown in FIG. 7, in some embodiments, the charge lead-out member 30 may be provided on a surface of the second functional layer 20 away from an action region 11. When providing the charge lead-out member 30, the body of the charge lead-out member 30 may be adhered to the second functional layer 20 using silver glue, etc., and the connector structure 32 can be bent to fit an edge of the second functional layer 20, i.e., a side alignment is performed along the edge of the laminated assembly 1000. Performing the side alignment can connect the body and the first functional layer 10 together using the connector structure 32 without affecting the strength of the laminated assembly 1000 itself.

The main arrangement of the connector structure 32 may be such that the charge lead-out portion 321 of the connector structure 32 may be mounted on the body, the connector 3213 of the connector structure 32 may be provided protruding with respect to the charge lead-out portion 321, so as to be electrically connected to an external power source, and the two power supply terminals 3221 of the connector structure 32 may be in contact with the two surfaces of the first functional layer 10 that are opposite to each other in the layer thickness direction.

When the connector 3213 of the connector structure 32 is electrically connected to an external power source (e.g., an ECU), the external power source can supply power to the first functional layer 10 through the power supply terminal 3221. The second functional layer 20 can also generate charges under the action of the first functional layer 10. However, since the second functional layer 20 is provided with the body, the body is electrically connected to the connector 3213 through the charge lead-out portion 321, and the connector 3213 can be grounded to an external power source, most of the charges generated on the second functional layer 20 can be transferred by the connector 3213, etc., so as to reduce the amount of charge accumulated on the second functional layer 20.

With the above configuration, by improving the connector structure 32 that supplies power to the first functional layer 10, the connector structure 32 can be grounded while supplying power to the first functional layer 10, thereby reducing the amount of charge accumulated on the second functional layer 20, thus improving the safety of the laminated assembly 1000 during use.

Continuing to refer to FIG. 7 in some embodiments, the first functional layer 10 may include the action region 11 and an adhesive region 12. The adhesive region 12 can be arranged around an edge of the action region 11. Ends of the two power supply terminals 3221 can extend through the adhesive region 12 and be electrically connected to opposite ends of the action region 11 in the layer thickness direction of the laminated assembly 1000, respectively.

Exemplarily, as shown in FIG. 7, the action region 11 may be made of PDLC, and the adhesive region 12 may be made of PVB. The adhesive region 12 can be arranged around the edge of the action region 11. For example, an orthographic projection of the action region 11 on the first transparent substrate 50 can be rectangular. An orthographic projection of the adhesive region 12 on the first transparent substrate 50 can be annular, and an inner ring of the annular structure is in contact with the action region 11.

The adhesive region 12 provided at the edge of the action region 11 can improve the adhesion effect between the entire first functional layer 10 and two film layers adjacent thereto in the layer thickness direction of the laminated assembly 1000, thereby reducing the probability of cracking between the first functional layer 10 and the two film layers. In addition, the power supply terminal 3221 extends through the adhesive region 12 and is electrically connected to the action region 11. The adhesive region 12 can also improve the stability of the connection between the power supply terminal 3221 and the action region 11 and reduces the probability of separation between the power supply terminal 3221 and the action region 11.

In some embodiments, the body may be a metal member, and a resistance value of the body may be less than a resistance value of the second functional layer 20. For example, the body may be a conductive copper foil. The second functional layer 20 may be coated with a silver paste to locate the body in a silver paste coating region. Since the lower the resistance of a conductor, the lower its impedance, and the stronger the conductivity of the conductor, the charges generated by the second functional layer 20 can be quickly transferred by the charge lead-out member 30.

Continuing to refer to FIG. 7, in some embodiments, a first blocking layer 31 is provided on a surface of the body away from the second functional layer 20. The first blocking layer 31 may be a film layer prepared by ink printing, or a film layer that serves as a barrier and is electrically insulated. The first blocking layer 31 is provided with a connecting channel 311. The charge lead-out portion 321 may be embedded in the connecting channel 311. It can also be understood that the first blocking layer 31 at least avoids a portion of the charge lead-out member 30 that is electrically connected to the body. That is, the first blocking layer 31 does not completely cover a surface of the body away from the first functional layer 10 and a part of the surface of the body away from the first functional layer 10 may be reserved without the first blocking layer 31.

For example, the connecting channel 311 illustrated in FIG. 7 is not coated with ink, and the portion not coated with ink is an avoidance portion 33. Certainly, in other embodiments, the avoidance portion 33 may alternatively protrude relative to the body, while no ink is coated on the avoidance portion 33.

In this way, the charges on the second functional layer 20 can be transferred to the charge lead-out portion 321 through the connecting channel 311, thereby accelerating a transfer speed of the charges on the second functional layer 20.

In actual applications, for example, when the above-mentioned laminated assembly 1000 is assembled on a vehicle, since the region where the first blocking layer 31 is located is mounted with the charge lead-out member 30, when the charge lead-out member 30 is connected to a sheet metal on a vehicle body or an ECU on the vehicle body, the first blocking layer 31 can shield the vehicle body sheet metal to reduce the probability of being exposed to the eyes of the user, thus enhancing the visual effect of the laminated assembly 1000 after mounting.

Secondly, since the connecting channel 311 allows the charge lead-out portion 321 to extend through, the avoidance portion 33 is provided at the connecting channel 311 and the avoidance portion 33 does not need to be coated with ink. Therefore, compared with applying ink to the entire side surface of the body, the provision of the relief portion 33 can reduce the amount of ink used.

In some embodiments, the charge lead-out portion 321 may be in contact with the second functional layer 20.

As shown in FIG. 7, the connecting channel 311 may be provided on the body through a hollowing process. One end of the charge lead-out portion 321 may extend through the connecting channel 311 and be electrically connected to the second functional layer 20, and the other end may be electrically connected to the connector 3213. Since both ends of the charge lead-out portion 321 are directly electrically connected to the second functional layer 20 and the connector 3213, respectively, the charge lead-out portion 321 can be used to quickly and accurately transfer the charges accumulated on the second functional layer 20, thereby increasing the speed at which the transfer of the charge can be performed.

In some embodiments, the laminated assembly 1000 further includes a fourth blocking layer (not shown), which is provided on the side of the body away from the second functional layer 20, and the fourth blocking layer at least avoids a portion of the charge lead-out member 30 that is electrically connected to the body.

The fourth blocking layer may be a film layer prepared by ink printing, or a film layer that serves as a barrier and is electrically insulated. The fourth blocking layer is provided with a passage. The charge lead-out portion 321 may be embedded in the passage. It can also be understood that the fourth blocking layer at least avoids a portion of the charge lead-out member 30 that is electrically connected to the body. That is, the fourth blocking layer does not completely cover a surface of the body away from the second functional layer 20, and a part of the surface of the body away from the second functional layer 20 may be reserved without providing the fourth blocking layer.

When the above-mentioned laminated assembly 1000 is assembled on a vehicle, since the region where the fourth blocking layer is located is mounted with the charge lead-out member 30, when the charge lead-out member 30 is connected to a sheet metal on a vehicle body or an ECU on the vehicle body, the fourth blocking layer can shield the vehicle body sheet metal to reduce the probability of being exposed to the eyes of the user, thus enhancing the visual effect of the laminated assembly 1000 after it is mounted.

In some embodiments, as shown in FIG. 5, the connector structure 32 may include a second conductive portion 323. Referring to FIG. 7 together, the second conductive portion 323 may be provided on the side of the body away from the second functional layer 20. The charge lead-out portion 321 and the connector 3213 as well as the power supply terminal 3221 and the connector 3213 can be electrically connected through the second conductive portion 323.

When the connector 3213 is electrically connected to an external power source, current may flow through the connector 3213 to the second conductive portion 323 and flow from the second conductive portion 323 to the power supply terminal 3221, and then flow to the first functional layer 10. The charges on the second functional layer 20 may flow from the charge lead-out portion 321 to the second conductive portion 323 then flow through the second conductive portion 323 to the connector 3213 and finally flow to the external power source.

The electrical connection between the power supply terminal 3221 and the connector 3213 and the electrical connection between the charge lead-out portion 321 and the connector 3213 are achieved through the second conductive portion 323, which can simplify the structure of the connector structure 32.

It should be noted that the structure of the charge lead-out portion 321 can be changed according to actual conditions, as long as the electrical connection between the second functional layer 20 and the connector 3213 is realized by utilizing the charge lead-out portion 321.

Referring to FIG. 5 and FIG. 7, in some embodiments, the charge lead-out portion 321 may be bent toward the body with respect to the second conductive portion 323.

Alternatively, referring to FIG. 7 and FIG. 8, in other embodiments, the charge lead-out portion 321 may be formed by a conductive adhesive portion provided on the second conductive portion 323 and the conductive adhesive portion can be adhered to the body.

Exemplarily, continuing to refer to FIG. 8, the second conductive portion 323 may include a housing and a conductor. The conductor can be accommodated in the housing, and the charge lead-out portion 321 and the connector 3213, as well as the power supply terminal 3221 and the connector 3213 can be electrically connected through the conductor. The housing can be provided with a first hollow hole. The charge lead-out portion 321 can be formed by a conductive adhesive portion, which is filled in the first hollow hole.

When a large amount of charges accumulates on the second functional layer 20, most of the charges can be transferred to the connector 3213 through the charge lead-out portion 321. In this way, the stability of the connection between the second conductive portion 323 and the body can be improved without affecting the transfer efficiency of the charge.

Furthermore, in some embodiments, as shown in FIG. 9, when one end of the charge lead-out member 30 is electrically connected to at least a part of the second blocking layer 80, the laminated body 100 can be mounted to an object to be mounted (e.g., a vehicle body sheet metal member 400) through the charge lead-out member 30. The charge lead-out member 30 can be grounded through the object to be mounted. That is, the charge lead-out member 30 can be a conductive member having a mounting function, which enriches the function of the charge lead-out member 30, enabling it to have a mounting function by itself, and there is no need to provide an additional mounting member for mounting the laminated assembly 1000.

Furthermore, in some embodiments, the charge lead-out member 30 may be adhesively connected between the object to be mounted and the laminated body 100.

Continuing to refer to FIG. 9, exemplarily, the charge lead-out member 30 may be a conductive member having an adhesive surface, and different adhesive surfaces of the conductive member may be adhered to the vehicle body sheet metal member 400 and the laminated body 100, respectively. In this way, the mounting mode of the charge lead-out member 30 can be simplified, making it easier for users to operate.

In some embodiments, the charge lead-out member 30 may be a conductive adhesive member. When the laminated assembly 1000 is mounted to the vehicle body sheet metal part 400, the assembly of the laminated assembly 1000 can be completed quickly. Moreover, when the laminated assembly 1000 is detached from the vehicle body, it is easy to remount the laminated assembly 1000. In addition, the conductive adhesive is inexpensive and easy to obtain, which can also reduce the production cost of the laminated assembly 1000.

As shown in FIG. 10, in some embodiments, the second functional layer 20 is located on the side of the second blocking layer 80 away from the charge lead-out member 30, and the second functional layer 20 and the second blocking layer 80 are staggered in the layer thickness direction. In other words, the second blocking layer 80 and the second functional layer 20 are provided in different layers. The second functional layer 20 and the second blocking layer 80 are electrically connected.

When an alternating current is applied to the laminated body 100, the laminated body 100 can generate an electromagnetic field. The second functional layer 20 can generate electric potential under the action of the electromagnetic field to accumulate charges.

When the second blocking layer 80 is conductive, the second functional layer 20 can be electrically connected to the second blocking layer 80, and the second blocking layer 80 is electrically connected to the charge lead-out member 30. When the second blocking layer 80 is insulated, the second functional layer 20 can extend through the second blocking layer 80 and be electrically connected to the charge lead-out member 30.

After the charge lead-out member 30 is grounded, the charges accumulated on the second functional layer 20 can be conducted away by the charge lead-out member 30 to reduce the amount of charge on the second functional layer 20. When a user touches the second functional layer 20 the user will not be subjected to an electric shock because the charge remaining on the second functional layer 20 is lower than a preset value, thereby improving the safety of the laminated assembly 1000 when in use.

Secondly, the second blocking layer 80 can also shield a mounting portion of the laminated assembly 1000 (e.g., the vehicle body sheet metal 400), which can enhance the aesthetic appearance of the laminated assembly 1000 and prevent the vehicle body sheet metal member 400 and the like from being directly exposed to the user's sight. In addition, the second blocking layer 80 can also block part of the ultraviolet rays, so as to prevent the ultraviolet rays from directly radiating on the charge lead-out member 30 and affecting the charge lead-out member 30.

Referring to FIG. 10, in some embodiments, the laminated assembly 1000 further includes a first encapsulation member 200. The first encapsulation member 200 may be located on a side of the second blocking layer 80 in the layer thickness direction and may be provided along a periphery of the second blocking layer 80. In other words, if the orthographic projection of the second blocking layer 80 in the layer thickness direction is a rectangle, then an orthographic projection of the first encapsulation member 200 in the layer thickness direction coincides with a contour of the rectangle, i.e., the orthographic projection of the first encapsulation member 200 coincides with the contour of the rectangle.

Secondly, the first encapsulation member 200 is provided with a second hollow hole (not shown), and the charge lead-out member 30 is provided in the second hollow hole. The first encapsulation member 200 is made of, but not limited to, insulating materials such as polyurethane (PU), thermoplastic vulcanizate (TPV), etc. The laminated assembly 1000 can reduce cracks on its edges and enhance its strength by providing the first encapsulation member 200.

When an alternating current is applied to the laminated body 100, a large amount of charges generated on the second functional layer 20 can be accumulated in a vicinity of the second hollow hole, and can be conducted away through the charge lead-out member 30 in the first hollow hole.

In summary, when the laminated assembly 1000 is provided with the first encapsulation member 200, the second hollow hole can be provided in the first encapsulation member 200, and the charge lead-out member 30 can be filled in the second hollow hole, so that when an alternating current is applied to the laminated assembly 1000, a large amount of charges accumulated on the second functional layer 20 can be conducted away by utilizing the charge lead-out member 30.

Continuing to refer to FIG. 10, in some embodiments, the laminated body 100 includes a second blocking layer 80. In the layer thickness direction, the second blocking layer 80 may be located between the first edge member 200 and the second functional layer 20. The second blocking layer 80 may selectively be provided with a third hollow hole (not shown) in communication with the second hollow hole.

In some embodiments, as shown in FIG. 11, when the third hollow hole is not provided on the second blocking layer 80, the entire second blocking layer 80 is conductive, or a contact portion between the second blocking layer 80 and the charge lead-out member 30 is conductive. When an alternating current is applied to the laminated assembly 1000, a large amount of charges on the second functional layer 20 can be directly transferred to the charge lead-out member 30 through the second blocking layer 80 and then conducted away through the charge lead-out member 30.

In other embodiments, as shown in FIG. 12, the second hollow hole is provided on the second blocking layer 80. The charge lead-out member 30 can extend through the first hollow hole and the second hollow hole in sequence and be electrically connected to the second functional layer 20. The second blocking layer 80 may be an insulating layer.

When an alternating current is applied to the laminated assembly 1000, a large amount of charges on the second functional layer 20 can accumulate in the vicinity of the second hollow hole, and the charge lead-out member 30 in the second hollow hole and the first hollow hole can form a charge transfer channel, and the above charges can be conducted away through the charge lead-out member 30.

In the above two methods, the second blocking layer 80 can shield the vehicle body sheet metal member 400 to prevent the vehicle body sheet metal member 400 from being directly exposed to the user's sight, and can also block part of the ultraviolet rays to reduce the probability of ultraviolet rays directly radiating on the charge-exporting member 30 and affecting the charge-exporting member 30.

In some embodiments, as shown in FIG. 12, the laminated assembly 1000 further includes a second encapsulation member 300. The second encapsulation member may wrap an outer peripheral wall of the laminated body 100 and is connected to the first encapsulation member 200. With this configuration, the second encapsulation member 300 can be used to more effectively protect the laminated assembly 1000, thereby further reducing the probability of cracks and water ingress at the edges of the laminated assembly 1000, which enhances the strength of the laminated assembly 1000.

In some embodiments, the laminated body 100 may include two blocking layers. That is, the laminated body 100 may include not only the second blocking layer 80 but also the third blocking layer 90. The second blocking layer 80 and the third blocking layer 90 are provided in different layers, and the second blocking layer 80 and the third blocking layer 90 can be provided at the same time, or only one of them can be provided.

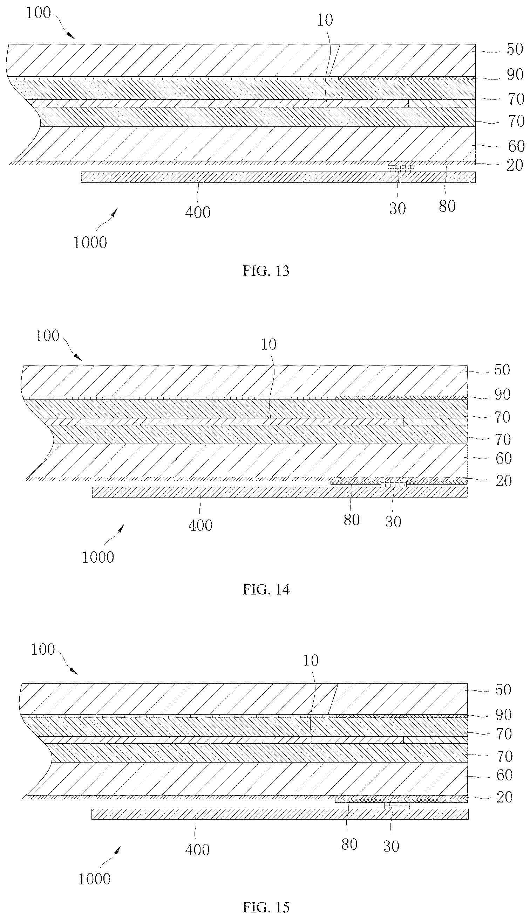

Referring to FIG. 13, in some embodiments, when only the third blocking layer 90 is provided in the laminated body 100, the third blocking layer 90 can be located on the side of the first transparent substrate 50 facing the first functional layer 10, and the third blocking layer 90 can be arranged along the periphery of the laminated body 100. It can be understood that if the orthographic projection of the first transparent substrate 50 in the layer thickness direction is a rectangle, then the orthographic projection of the third blocking layer 90 in the layer thickness direction coincides with the contour of the rectangle, i.e., the orthographic projection of the third blocking layer 90 coincides with the contour of the rectangle.

In this way, the third blocking layer 90 can shield the charge lead-out member 30 and the vehicle body sheet metal member 400, etc., so as to enhance the visual effect of the laminated assembly 1000 after mounting.

In some embodiments, the projection of the third blocking layer 90 along the layer thickness direction covers the charge lead-out member 30, and the third blocking layer 90 is an insulating member. In this way, not only the difficulty of obtaining the third blocking layer 90 is reduced, but also the shielding effect on the charge lead-out member 30 and the vehicle body sheet metal member 400, etc., is improved.

In some other embodiments, the projection of the third blocking layer 90 along the layer thickness direction can cover the charge lead-out member 30, while the third blocking layer 90 can be a non-insulating member. In this way, the shielding effect on the charge lead-out member 30 and the vehicle body sheet metal member 400, etc. can be improved.

In yet some embodiments, the third blocking layer 90 is an insulating member, while the projection of the third blocking layer 90 along the layer thickness direction does not cover the charge lead-out member 30. In this way, the difficulty of obtaining the third blocking layer 90 can be reduced.

The charge lead-out member 30 may be directly glued to the second functional layer 20. When an alternating current is applied to the laminated body 100 a large amount of charges accumulated on the second functional layer 20 can be directly conducted away by the charge lead-out member 30.

In other embodiments, as shown in FIG. 14, when both the second blocking layer 80 and the third blocking layer 90 are provided in the laminated body 100, the second blocking layer 80 may be located on the side of the second functional layer 20 away from the second transparent substrate 60, and the third blocking layer 90 may be located on the side of the first transparent substrate 50 facing the first functional layer 10.

The second blocking layer 80 may selectively be provided with the second hollow hole. The third blocking layer 90 may also selectively be set as a conductive layer, a film layer or an insulating layer with both the conductive region 81 and the insulating region 82, and the specific situation can be determined according to actual conditions.

As shown in FIG. 14, when the second blocking layer 80 is provided with the second hollow hole, and an alternating current is applied to the laminated body 100, a large amount of charges accumulated on the second functional layer 20 can be conducted away through the charge lead-out member 30 in the second hollow hole.

As shown in FIG. 15, when the second blocking layer 80 is not provided with the second hollow hole, when alternating current is applied to the laminated body 100, a large amount of charges accumulated on the second functional layer 20 first pass through the second blocking layer 80 and are then conducted away by the charge lead-out member 30.

It can be seen that by providing the third blocking layer 90 on the laminated body 100, the specific structure of the laminated assembly 1000 can be determined according to actual conditions, thereby expanding the application range of the laminated assembly 1000.

Continuing to refer to FIG. 15, in some embodiments, both the second blocking layer 80 and the charge lead-out member 30 can be prepared as a single component. For example, the side of the second blocking layer 80 facing the vehicle body sheet metal member 400 is provided with an adhesive conductive region 81. The second blocking layer 80 has both conductive and adhesive functions to simplify the structure of the laminated assembly 1000.

The adhesive conductive region 81 of the second blocking layer 80 can be made of anisotropic conductive film (ACF). ACF is a transparent polymer connecting material having three major characteristics of adhesion, conductivity, and insulation at the same time, and having the distinctive characteristic of being conductive along a vertical direction and insulating along a horizontal direction.

Continuing to refer to FIG. 15 in some embodiments, the projection of the third blocking layer 90 along the layer thickness direction may cover the charge lead-out member 30. The projection of the second blocking layer 80 along the layer thickness direction may cover the charge lead-out member 30 or may not cover the charge lead-out member 30. Since the third blocking layer 90 can shield both the vehicle body sheet metal member 400 and the charge lead-out member 30 together, which prevents the vehicle body sheet metal member 400 from being directly exposed to the user's sight, and can also block part of the ultraviolet rays to reduce the probability of ultraviolet rays directly radiating on the charge lead-out member 30 and affecting the charge lead-out member 30, there is no need to make too many restrictions on the second blocking layer 80.

It should be understood that in the laminated assembly 1000 having both the second blocking layer 80 and the third blocking layer 90, the projections of the second blocking layer 80 and the third blocking layer 90 in the layer thickness direction may be equal or unequal, as long as one of them can cover the charge lead-out member 30.

Secondly, the third blocking layer 90 can be made of insulating material or not according to specific situations. Thus, providing the third blocking layer 90 can further enrich the type of internal structure of the laminated assembly 1000 and expand the application range of the laminated assembly 1000.

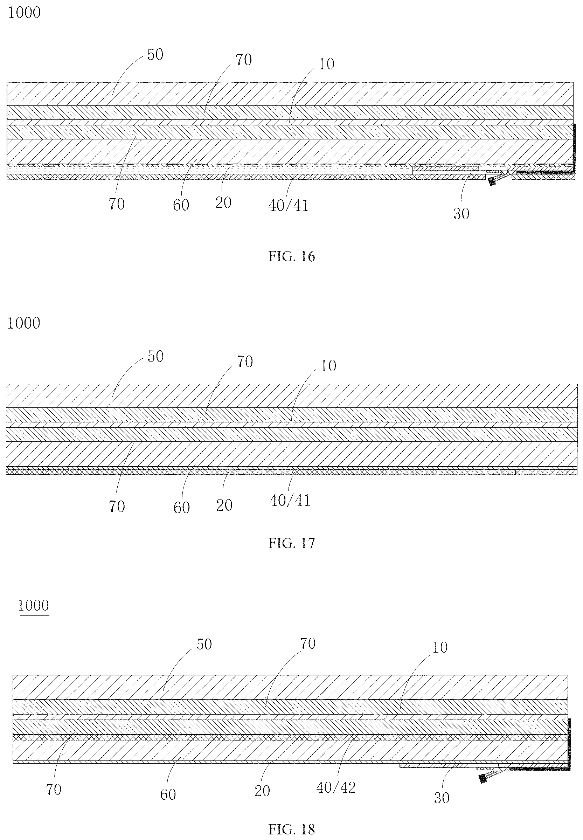

In some embodiments, as shown in FIG. 16, the electromagnetic field shielding member 40 further includes an insulating shielding layer 41. The insulating shielding layer 41 may be located on a side of the second functional layer 20 away from the first functional layer 10, and the insulating shielding layer 41 at least avoids a portion of the charge lead-out member 30 that is electrically connected to the body. That is, the portion of the charge lead-out member 30 electrically connected to the body may not be provided with the insulating shielding layer 41.

Since the insulating shielding layer 41 may have a barrier effect on the second functional layer 20, the probability of the second functional layer 20 being directly exposed to air is reduced. When a user touches the second functional layer 20 the user and the second functional layer 20 are separated by the insulating shielding layer 41, thereby reducing the probability that the leakage of the charge accumulated on the second functional layer 20 may lead to an electric shock to the user, thus improving the reliability of the laminated assembly 1000.

It should be understood that, in some embodiments, as shown in FIG. 17, only the insulating shielding layer 41 may be provided in the laminated assembly 1000. It can be determined that one or both of the insulating shielding layer 41 and the charge lead-out member 30 are provided in the laminated assembly 1000 according to the actual situation.

As shown in FIG. 18, in some embodiments, the electromagnetic field shield member 40 further includes a first shielding layer 42. For example, the first shielding layer 42 may be a metal fiber layer with a relatively high metal content. The first shielding layer 42 may be provided between the second functional layer 20 and the first functional layer 10. Both ends of the first shielding layer 42 and the first functional layer 10 in the layer thickness direction of the laminated assembly 1000 are configured to be electrically connected to an external power source. A voltage direction of the first shielding layer 42 is opposite to a voltage direction of the first functional layer 10. The voltage direction refers to a direction from high potential to low potential.

For example, a positive pole of the first shielding layer 42 is electrically connected to a positive pole of the external power source, and a negative pole of the first shielding layer 42 is electrically connected to a negative pole of the external power source, while a positive pole of the first functional layer 10 is electrically connected to the negative pole of the external power source, and a negative pole of the first functional layer 10 is electrically connected to the positive pole of the external power source. Thus, a direction of the electromagnetic field generated by the first shielding layer 42 is opposite to a direction of the electromagnetic field generated by the first functional layer 10.

Exemplarily, as shown in FIG. 18, both ends of the first shielding layer 42 and the first functional layer 10 in the layer thickness direction of the laminated assembly 1000 are configured to be electrically connected to the same external power source. The first shielding layer 42 may be provided between the first transparent substrate 50 and the adhesive layer 70. When the first shielding layer 42 and the first functional layer 10 are powered at the same time, the currents connected to the first shielding layer 42 and the first functional layer 10 are in opposite directions, and thus the direction of the electromagnetic field generated by the first shielding layer 42 is opposite to the direction of the electromagnetic field generated by the first functional layer 10.

Since an induced current generated by the second functional layer 20 is relatively small under the action of the electromagnetic field generated by the first shielding layer 42, the charges accumulated on the second functional layer 20 are also small, which can reduce the probability of electric shock when the user touches the second functional layer 20.

It should be understood that the first shielding layer 42 can be provided on a side adjacent to the second functional layer 20 or on a side away from the second functional layer 20, as long as it can block the second functional layer 20 from generating induced current.

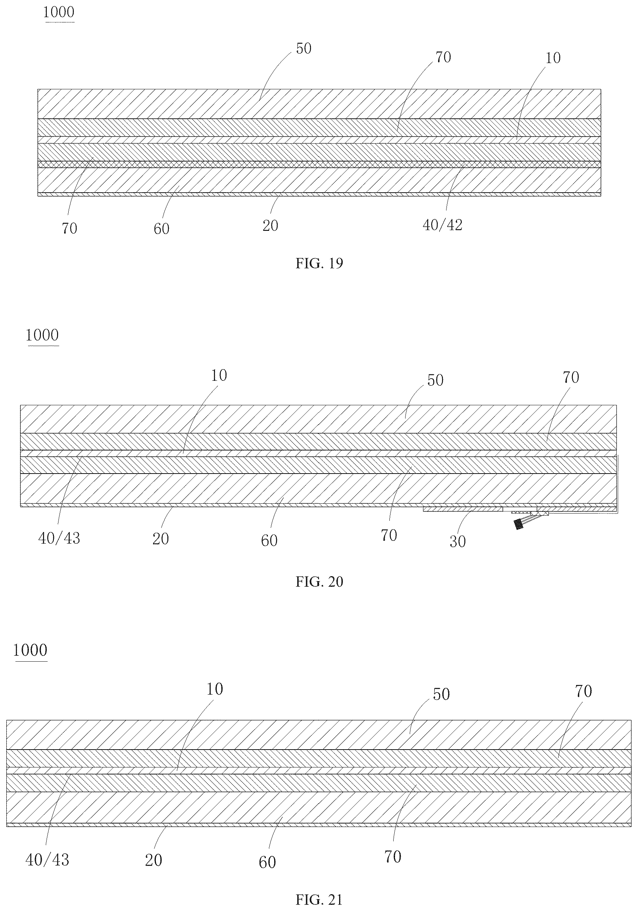

As shown in FIG. 19, in some embodiments, only the first shielding layer 42 may be provided in the laminated assembly 1000. It can be determined that one or both of the first shielding layer 42 and the charge lead-out member 30 are provided in the laminated assembly 1000 according to the actual situation.

In some embodiments, as shown in FIG. 20, the electromagnetic field shielding member 40 further includes a second shielding layer 43. The second shielding layer 43 may be distributed around the first functional layer 10, and the second shielding layer 43 avoids a part of the charge lead-out member 30 that is electrically connected to the first functional layer 10. That is, the portion where the charge lead-out member 30 and the first functional layer 10 are electrically connected is not provided with the second shielding layer 43.

The above-mentioned second shielding layer 43 can be made of a material that can shield the electric field, so as to reduce the probability of an induced current generated by the second functional layer 20, thereby reducing the amount of charges accumulated on the second functional layer 20, which may reduce the probability of electric shock when a user touches the second functional layer 20.

It should be understood that the configuration of the second shielding layer 43 is not limited to the configuration shown in FIG. 13, and the second shielding layer 43 may also only cover a partial area of the first functional layer 10.

As shown in FIG. 21, in some embodiments, only the second shielding layer 43 may be provided in the laminated assembly 1000. It can be determined that one or both of the second shielding layer 43 and the charge lead-out member 30 are provided in the laminated assembly 1000 according to the actual situation.

In addition, a connector structure 32 for a laminated assembly is further provided according to some embodiments of the present application. The connector structure 32 may include a charge lead-out portion 321 and a power supply portion 322. One end of the power supply portion 322 can be configured to be electrically connected to the first functional layer 10 of the laminated assembly 1000, and the other end of the power supply portion 322 can be configured to electrically connect to an external power source. One end of the charge lead-out portion 321 can be used to electrically connect to the body of the laminated assembly 1000, and the other end of the charge derivation portion 321 can be configured to be grounded or electrically connected to the power supply portion 322 to be grounded through the power supply portion 322.

With the above configuration, the setting mode of the charge lead-out member 30 is expanded without affecting the function of the charge lead-out member 30, thereby expanding the application range of the charge lead-out member 30.

In some embodiments, referring to FIG. 5, the power supply portion 322 includes at least two power supply terminals 3221. One end of each power supply terminal 3221 can be electrically connected to the first functional layer 10, and the other end of each power supply terminal 3221 can be electrically connected to an external power source. One end of the charge lead-out portion 321 can be electrically connected to the body of the laminated assembly 1000, and the other end of the charge lead-out portion 321 can be configured to be electrically connected to an external grounding member.

When one end of the power supply terminal 3221 is electrically connected to an external power source, current applied by the external power source can flow to the first functional layer 10 through the power supply terminal 3221. The first functional layer 10 can generate an electromagnetic field, and the second functional layer 20 can accumulate charges under the action of the first functional layer 10. Since the body of the charge lead-out portion 321 is provided on the second functional layer 20, and the charge lead-out portion 321 can be electrically connected to the ground terminal of the ECU, a large amount of charges on the second functional layer 20 can first flow to the body, and then pass through the body to flow through the charge lead-out portion 321 and the ECU, and finally flow to the ground.

With the above configuration, the structure of the charge lead-out portion 321 is simplified, so that it can be directly electrically connected to the ECU, etc.

Referring to FIGS. 5 and 7 in conjunction, in some embodiments, the power supply portion 322 may include at least two power supply terminals 3221, and the charge lead-out portion 321 may include at least one connector 3213. The connector 3213 may be configured to be electrically connected to an external power source, for example, the connector 3213 may be electrically connected to the ECU. The charge lead-out portion 321 can be electrically connected to the connector 3213 and the body of the laminated assembly 1000, so that the body is grounded through the external power source.

One end of each of the power supply terminals 3221 can be electrically connected to the connector 3213, and the other ends of the power supply terminals 3221 can be electrically connected to opposite ends of the first functional layer 10 in the layer thickness direction, so that an external power source can apply current to the first functional layer 10.

With such a configuration, the connector structure 32 can be electrically connected to an external power source to apply current to the first functional layer 10 while also being grounded.

In addition, some embodiments of the present application further provide a vehicle. The vehicle includes a vehicle body and the laminated assembly 1000 as described above. The laminated assembly 1000 can be mounted to the vehicle body. Since the vehicle includes the laminated assembly 1000 the vehicle has the functions and beneficial effects of the laminated assembly 1000 provided in the aforementioned embodiments, which will not be described in detail here.

The above-mentioned embodiments do not constitute a limitation on the protection scope of the technical solution. Any modifications, equivalent replacements and improvements made within the spirit and principles of the above-mentioned embodiments shall be included within the protection scope of this technical solution.

The foregoing descriptions are merely specific embodiments of the present application, but are not intended to limit the protection scope of the present application. Any variation or replacement readily figured out by a person skilled in the art within the technical scope disclosed in the present application shall all fall within the protection scope of the present application. Therefore, the protection scope of the present application shall be subject to the protection scope of the appended claims.

## Claims

1. A laminated assembly, comprising:
a laminated body comprising a first transparent substrate, a second transparent substrate, a first functional layer, and a second functional layer;
wherein the first functional layer is provided between the first transparent substrate and the second transparent substrate and is configured to be electrically connected to an external power source;
wherein the second functional layer is provided on a side of the second transparent substrate away from the first functional layer;
(i) wherein the laminated body further comprises at least one of a charge lead-out member and an electromagnetic field shielding member, the charge lead-out member is provided on a side of the second functional layer away from the second transparent substrate, one end of the charge lead-out member is electrically connected to the first functional layer, and another end of the charge lead-out member is configured to be grounded; the electromagnetic field shielding member is provided between the first functional layer and the second functional layer, or the electromagnetic field shielding member is provided on a side of the second functional layer away from the second transparent substrate;
or, (ii) wherein the laminated body further comprises a second blocking layer provided on a side of the second functional layer away from the second transparent substrate, the second blocking layer is arranged along a periphery of the laminated body, one end of the charge lead-out member is electrically connected to at least a part of the second blocking layer, and another end of the charge lead-out member is configured to be grounded.

2. The laminated assembly according to claim 1, wherein when the charge lead-out member is electrically connected to the first functional layer, the charge lead-out member comprises a body and a connector structure, and the body is provided on the second functional layer;
the connector structure comprises a charge lead-out portion and a power supply portion, one end of the power supply portion is configured to be electrically connected to the first functional layer, and another end of the power supply portion is configured to be electrically connected to the external power source; one end of the charge lead-out portion is electrically connected to the body, and another end of the charge lead-out portion is configured to be grounded, or another end of the charge lead-out portion is electrically connected to the power supply portion to be grounded through the power supply portion.

3. The laminated assembly according to claim 2, wherein the power supply portion comprises at least two power supply terminals, one end of each of the power supply terminals is configured to be electrically connected to the first functional layer, and another end of each of the power supply terminals is configured to be electrically connected to the external power source, one end of the charge lead-out portion is electrically connected to the body, and another end of the charge lead-out portion is configured to be electrically connected to an external grounding member.

4. The laminated assembly according to claim 3, wherein the charge lead-out portion is provided on a side of the body away from the second transparent substrate, the charge lead-out portion comprises a first conductive portion and an insulating portion, one end of the first conductive portion is electrically connected to the body, another end of the first conductive portion is configured to be electrically connected to the external grounding member, and the insulating portion wraps an exterior of the first conductive portion.

5. The laminated assembly according to claim 2, wherein the power supply portion comprises at least two power supply terminals, the charge lead-out portion comprises at least one connector configured to be electrically connected to the external power source, and the charge lead-out portion is electrically connected to the connector and the body, so that the body is grounded through the external power source;
wherein one ends of the power supply terminals are electrically connected to the connector, and other ends of the power supply terminals are electrically connected to two opposite ends of the first functional layer in a layer thickness direction, so that the external power source applies current to the first functional layer.

6. The laminated assembly according to claim 2, wherein a first blocking layer is provided on a surface of the body away from the second functional layer, the first blocking layer is provided with a connecting channel, and the charge lead-out portion is embedded in the connecting channel;

7. The laminated assembly according to claim 6, wherein the charge lead-out portion is in contact with the second functional layer.

8. The laminated assembly according to claim 2, wherein the connector structure further comprises a second conductive portion provided on a side of the body away from the second functional layer;
wherein the charge lead-out portion and the connector are electrically connected through the second conductive portion, and the power supply terminal and the connector are electrically connected through the second conductive portion.

9. The laminated assembly according to claim 8, wherein the charge lead-out portion is bent toward the body with respect to the second conductive portion;
or the charge lead-out portion is formed by a conductive adhesive portion provided on the second conductive portion, and the conductive adhesive portion is adhered to the body.

10. The laminated assembly according to claim 8, wherein the second conductive portion comprises a housing and a conductor accommodated in the housing, the charge lead-out portion and the connector are electrically connected through the conductor, and the power supply terminal and the connector are electrically connected through the conductor;
wherein the housing is provided with a first hollow hole, the charge lead-out portion is formed by the conductive adhesive portion, and the conductive adhesive portion is filled in the first hollow hole.

11. The laminated assembly according to claim 2, wherein the body is a metal member, and a resistance value of the body is less than a resistance value of the second functional layer.

12. The laminated assembly according to claim 2, wherein the first functional layer comprises an action region and an adhesive region, the adhesive region is arranged around an edge of the action region, ends of the power supply terminals extend through the adhesive region and are electrically connected to opposite ends of the action region in a layer thickness direction of the laminated assembly, respectively.

13. The laminated assembly according to claim 2, further comprising a fourth blocking layer provided on a side of the body away from the second functional layer, wherein the fourth blocking layer at least avoids a part of the charge lead-out member electrically connected to the body.

14. The laminated assembly according to claim 1, wherein when one end of the charge lead-out member is electrically connected to at least a part of the second blocking layer, the laminated body is mounted on an object to be mounted through the charge lead-out member, and the charge lead-out member is grounded through the object to be mounted.

15. The laminated assembly according to claim 14, wherein the charge lead-out member is adhesively connected between the object to be mounted and the laminated body.

16. The laminated assembly according to claim 15, wherein the charge lead-out member is a conductive adhesive member.

17. The laminated assembly according to claim 14, further comprising a first encapsulation member located on a side of the second blocking layer in a layer thickness direction, wherein the first encapsulation member is provided with a second hollow hole, and the charge lead-out member is provided in the second hollow hole.

18. The laminated assembly according to claim 17, further comprising a second encapsulation member, wherein the second encapsulation member wraps an outer peripheral wall of the laminated body and is connected to the first encapsulation member.

19. The laminated assembly according to any one of claims 14 to 18, wherein the second functional layer is located on a side of the second blocking layer away from the charge lead-out member, and the second functional layer and the second blocking layer are staggered in the layer thickness direction;
wherein the second functional layer and the second blocking layer are electrically connected.

20. The laminated assembly according to claim 19, wherein the laminated body further comprises a third blocking layer located on a side of the first transparent substrate facing the first functional layer (10), and the third blocking layer is arranged along a periphery of the laminated body.

21. The laminated assembly according to claim 20, wherein a projection of the third blocking layer in the layer thickness direction covers the charge lead-out member, and the third blocking layer is an insulating member.

22. The laminated assembly according to claim 20, wherein a projection of the third blocking layer in the layer thickness direction covers the charge lead-out member.

23. The laminated assembly according to claim 20, wherein the third blocking layer is an insulating member.

24. The laminated assembly according to any one of claims 1 to 13, wherein the electromagnetic field shielding member further comprises an insulating shielding layer, the insulating layer is located on a side of the second functional layer away from the first functional layer, and the insulating layer at least avoids a part of the charge lead-out member that is electrically connected to the charge lead-out member.

25. The laminated assembly according to any one of claims 1 to 13, wherein the electromagnetic field shielding member further comprises a first shielding layer provided between the second functional layer and the first functional layer;
wherein both ends of the first shielding layer and the first functional layer in a layer thickness direction of the laminated assembly are configured to be electrically connected to external power sources, and a voltage direction of the first shielding layer is opposite to a voltage direction of the first functional layer.

26. The laminated assembly according to claim 25, wherein both ends of the first shielding layer and the first functional layer in the layer thickness direction of the laminated assembly are configured to be electrically connected to a same external power source.

27. The laminated assembly according to any one of claims 1 to 13, wherein the electromagnetic field shielding member further comprises a second shielding layer distributed around the first functional layer, and the second shielding layer avoids a part of the charge lead-out member that is electrically connected to the first functional layer.

28. A connector structure for a laminated assembly, comprising a charge lead-out portion and a power supply portion, wherein one end of the power supply portion is configured to be electrically connected to a first functional layer of the laminated assembly, another end of the power supply portion is configured to be electrically connected to an external power source, one end of the charge lead-out portion is configured to be electrically connected to a body of the laminated assembly, and another end of the charge lead-out portion is configured to be grounded, or another end of the charge lead-out portion is configured to electrically connected to the power supply portion to be grounded through the power supply portion.

29. The connector structure according to claim 28, wherein the power supply portion comprises at least two power supply terminals, one end of each of the power supply terminals is configured to be electrically connected to the first functional layer, and another end of each of the power supply terminals is configured to be electrically connected to the external power source, one end of the charge lead-out portion is electrically connected to the body of the laminated assembly, and another end of the charge lead-out portion is configured to be electrically connected to an external grounding member.

30. The connector structure according to claim 28, wherein the power supply portion comprises at least two power supply terminals, the charge lead-out portion comprises at least one connector, the connector is configured to be electrically connected to the external power source, and the charge lead-out portion is electrically connected to the connector and the body of the laminated assembly, so that the body of the laminated assembly is grounded through the external power source;
wherein one end of each of the power supply terminals is electrically connected to the connector, and other ends of the power supply terminals are electrically connected to two opposite ends of the first functional layer in a layer thickness direction, so that the external power source applies current to the first functional layer.

31. A vehicle comprising a vehicle body and the laminated assembly according to any one of claims 1 to 27, wherein the laminated assembly is mounted to the vehicle body.
